# FASCICULE DE BREVET EUROPEEN

(11) **EP 0 705 575 B1**
(45) Date de publication et mention de la délivrance du brevet: **08.08.2001**
(21) Numéro de dépôt: 95402226.5
(22) Date de dépôt: 05.10.1995
(51) Int. Cl.: A61C 13/00, A61C 8/00

(54) **Procédé de réalisation d'une prothese dentaire fixée sur un implant et pièce intermédiaire pour la mise en oeuvre de ce procédé**
Verfahren zur Herstellung einer auf einem Implantat fixierten dentalen Prothese und Zwischenstück zur Durchführung dieses Verfahrens
Method of making a dental prosthesis fixed on an implant, and intermediate piece for carrying out this method

(30) Priorité: 05.10.1994 FR 9411899
(43) Date de publication de la demande: 10.04.1996
(73) Titulaire: Tyszblat Sadoun, Michèle, 92400 Courbevoie (FR)
(72) Inventeur: Tyszblat Sadoun, Michèle, 92400 Courbevoie (FR)
(74) Mandataire: Nony, Michel

(56) Documents cités:
- EP-A- 0 240 643
- EP-A- 0 241 384
- US-A- 5 180 303

## Description

La présente invention a pour objet un procédé de réalisation d'une prothèse dentaire fixée sur un implant et une pièce intermédiaire utilisable pour la mise en oeuvre de ce procédé.

Dans un certain nombre de cas, il est intéressant de remplacer une dent naturelle par une prothèse qui est supportée par un implant directement fixé dans le maxillaire supérieur ou inférieur.

Un tel implant se présente par exemple sous la forme d'une vis cylindrique en titane qui est engagée assez profondément dans le maxillaire où elle se trouve immobilisée.

Une prothèse est alors fixée par vissage sur l'implant.

Les procédés connus qui mettent en oeuvre cette technique posent un certain nombre de difficultés.

Tout d'abord, il est nécessaire que la prothèse soit solidement assujettie à l'implant, ce qui implique une très bonne correspondance entre la forme de la partie supérieure de l'implant et la forme de la partie inférieure de la prothèse qui s'engage sur l'implant.

Il est également nécessaire que la prothèse présente une résistance mécanique suffisante pour pouvoir résister aux efforts qu'elle subit lors de la mastication.

Pour cela, il est connu d'utiliser une pièce intermédiaire industrielle en céramique qui est fixée sur l'implant à l'aide d'une vis et sur laquelle on engage une couronne artificielle qui présente la forme d'une dent naturelle.

Cette solution ne donne cependant pas entière satisfaction en raison du fait que l'implant, qui doit être positionné en fonction de la configuration du maxillaire, peut, dans certains cas, être incliné d'un angle non négligeable par rapport à l'axe de la dent à remplacer et, dans d'autres cas, être décalé latéralement par rapport cet axe.

Dans de telles circonstances, la pièce intermédiaire en céramique peut difficilement, compte-tenu de sa dureté, être usinée en étant placée sur l'implant dans la bouche du patient ou sur un modèle de la bouche du patient.

Il en résulte qu'avec les dispositifs connus, la pièce intermédiaire en céramique reste généralement dans l'axe de l'implant, ce qui impose une structure très dissymétrique à la couronne qui est placée sur la pièce intermédiaire.

De surcroît, il se produit souvent un déchaussement naturel de l'implant qui résulte d'une récession de la gencive, ce qui a pour effet de rendre de plus en plus visible la partie inférieure de la prothèse et en particulier la partie de la pièce intermédiaire fixée directement sur l'implant, ce qui est d'autant plus gênant que la céramique ne présente pas l'aspect, et en particulier la translucidité, des dents naturelles.

La présente invention a pour objet un procédé qui élimine tous les inconvénients précités et qui permet à un praticien de donner facilement à la pièce intermédiaire, placée sur l'implant dans la bouche du patient ou sur un modèle de la bouche du patient, une forme appropriée pour supporter une couronne dans de bonnes conditions.

En d'autres termes, l'invention donne au praticien la possibilité, après avoir placé la pièce intermédiaire sur l'implant ou sur un modèle de la bouche du patient, de travailler cette pièce intermédiaire pour lui donner une forme sensiblement tronconique traditionnelle, avec la même facilité que s'il le faisait sur un moignon de dent naturelle, voire avec une facilité accrue.

La présente invention a pour objet un procédé pour réaliser une prothèse dentaire, du type comprenant les étapes consistant à immobiliser un implant de préférence métallique dans le maxillaire et à fixer une pièce intermédiaire sur ledit implant de préférence à l'aide d'une vis, ce procédé étant caractérisé par le fait que l'on utilise une pièce intermédiaire obtenue par frittage d'une poudre à base d'oxydes métalliques présentant une structure poreuse à pores ouverts ; que l'on monte la pièce intermédiaire sur l'implant sur un modèle de la bouche du patient ; qu'à l'aide d'un outil tel qu'une fraise, on donne à la surface externe de la pièce intermédiaire une forme appropriée à la réalisation de la prothèse ; que l'on démonte la pièce intermédiaire de l'implant ; que l'on imprègne la pièce intermédiaire avec du verre en la plaçant au contact de ce verre dans une ambiance à température suffisamment élevée pour que le verre s'infiltre à l'état fondu dans la pièce intermédiaire et occupe la totalité de ses pores ; et qu'après refroidissement, on fixe la pièce intermédiaire sur l'implant.

Selon un mode de mise en oeuvre préféré de l'invention, on donne à la surface externe de la pièce intermédiaire une forme de dépouille, par exemple sensiblement tronconique, apte à servir de support à une couronne obtenue par des moyens conventionnels, cette forme de dépouille étant la même que celle que l'on donne traditionnellement à un moignon d'une dent naturelle pour y sceller une couronne artificielle.

Selon un autre mode de mise en oeuvre de l'invention, on donne à la surface externe de la pièce intermédiaire la forme que l'on désire donner à la dent artificielle.

Dans ce cas, la pièce intermédiaire joue également le rôle d'une couronne dentaire qui est directement fixée sur l'implant.

Dans un mode de mise en oeuvre préféré de ce procédé, l'étape d'imprégnation de verre s'effectue à une température comprise entre environ 1080 et 1200°C, pendant une durée de 20 mn à 2 heures.

On utilise à cet effet, un verre ayant avantageusement la composition pondérale suivante :

| | |
|---|---|
| SiO₂ | 13 à 20 % |
| Al₂O₃ | 10 à 28 % |
| B₂O₃ | 10 à 18 % |
| CaO | 0 à 8 % |
| La₂O₃ | 20 à 50 % |
| TiO₂ | 0 à 10 % |
| ZnO₂ | 0 à 5 % |
| Oxydes colorants | 0 à 10 % |

Selon un mode de mise en oeuvre préféré de l'invention, après avoir imprégné la pièce intermédiaire par du verre à l'état fondu, recouvre la partie de la pièce intermédiaire qui ne vient pas directement contact de l'implant, d'un émail qui donne à la surface extérieure de pièce intermédiaire l'apparence et notamment la translucidité des der naturelles.

De cette manière, lorsqu'à la suite d'une récession de la gencive, la pièce intermédiaire devient visible, elle présente le même aspect que la couronne qui la recouvre.

A cet effet, on peut utiliser une porcelaine dentaire ayant un coefficient de dilatation adapté dans le but simplement de modifier le rendu optique de la pièce intermédiaire en lui donnant l'aspect d'une racine naturelle, ou un bio-verre qui présente en outre les avantages de préserver l'épithelium gingival et de libérer un élément chimique bactériostatique, par exemple du fluor.

Conformément à l'invention, on utilise avantageusement une pièce intermédiaire présentant, avant imprégnation par du verre, des pores dont le diamètre est compris entre environ 0,2 et 2 *µ*m, lesdits pores constituant un réseau ouvert continu qui occupe de préférence entre environ 15 et 50 % du volume total de la pièce intermédiaire.

Conformément à l'invention, il est essentiel que la pièce intermédiaire qui est placée dans la bouche du patient ou sur un modèle de cette bouche pour y être travaillée par le praticien comme un moignon de dent naturelle soit assez friable pour subir l'action des différents instruments dentaires mais suffisamment solide pour conserver sa forme et ne pas se casser lorsqu'elle subit ce traitement.

En particulier, la pièce intermédiaire doit comporter une partie destinée à être fixée à l'implant qui résiste à la pression d'une vis de fixation qui la traverse et est vissée dans un alésage taraudé de l'implant.

En d'autres termes, les caractéristiques mécaniques imposées à la pièce intermédiaire sont mutuellement contradictoires, d'où la difficulté de déterminer le matériau le plus approprié pour conférer ces deux qualités de friabilité et de solidité à la pièce intermédiaire.

Conformément à l'invention, une pièce intermédiaire présentant de bonnes caractéristiques mécaniques peut être obtenue de la manière suivante.

On réalise une pâte par mélange d'une poudre à base d'oxyde métallique avec un liant organique, après quoi l'on met en forme cette pâte pour obtenir une pièce comportant une partie inférieure dont la forme correspond exactement avec la forme de la partie supérieure de l'implant qui doit recevoir la pièce intermédiaire et une partie supérieure dont la forme n'est pas déterminée mais qui peut être avantageusement cylindrique, cette partie supérieure de la pièce intermédiaire étant destinée à être façonnée par le praticien dans la bouche du patient ou sur un modèle de la bouche du patient, par exemple à l'aide d'une fraise.

La poudre à base d'oxyde métallique présente avantageusement une granulométrie moyenne comprise entre 2 et 10 micromètres.

On procède ensuite à un chauffage de la pièce ainsi obtenue, ce qui provoque d'abord l'élimination du liant organique par calcination, puis le frittage de la poudre à base d'oxyde métallique, c'est-à-dire la fixation des différentes particules de poudre les unes avec les autres.

La pièce intermédiaire peut-être par exemple réalisée à l'aide d'une pâte qui comprend entre 45 et 70 % en volume de poudre à base d'oxyde métallique et de 30 à 55 % en volume de liant organique.

De manière préférée, on utilise comme poudre à base d'oxyde métallique un mélange d'alumine (Al₂O₃) et de zircone (ZrO₂) partiellement stabilisée.

Comme zircone partiellement stabilisée, on peut utiliser un mélange constitué par 88 % en moles d'oxyde de zirconium et 12 % en moles d'oxyde de cérium, ou 90 % en moles d'oxyde de zirconium et 10 % en moles d'oxyde de cérium ou 98 % en moles d'oxyde de zirconium et 2 % en moles d'oxyde d'yttrium, ou 97 % en moles d'oxyde de zirconium et 3 % en moles d'oxyde d'yttrium.

De préférence, la proportion d'alumine et de zircone dans une telle poudre à base d'oxyde métallique est de 0 à 70 % en poids d'alumine et 30 à 100 % en poids de zircone.

Avantageusement, on peut doper la poudre à base d'oxyde métallique pour la colorer en y introduisant des oxydes métalliques d'éléments de transition tels que Ti, V, Cr, Mn, Fe, Co et Ni dans une proportion de préférence comprise entre 0 et 1 % en poids.

Avantageusement, l'élimination du liant s'effectue par calcination à une température comprise entre environ 280 et 400° C pendant une durée de 2 à 24 heures, la montée en température s'effectuant à un rythme d'environ 5 à 10° C par heure.

Le frittage s'effectue de préférence à une température comprise entre 1100 et 1450°C pendant une durée de 2 à 10 heures, la montée en température s'effectuant à un rythme d'environ 60 à 300° C par heure.

Dans le but de mieux faire comprendre l'invention, on va décrire maintenant trois exemples de mise en oeuvre du procédé de réalisation d'une prothèse dentaire selon l'invention, en référence au dessin annexé dans lequel :
- la figure 1 est une vue en coupe d'une portion de mâchoire dans laquelle est fixé un implant métallique,
- la figure 2 est une vue analogue à celle de la figure 1 après mise en place d'une pièce intermédiaire poreuse réalisée en une poudre frittée,
- la figure 3 est une vue analogue à celles des figures précédentes après fraisage de la pièce intermédiaire, et
- la figure 4 est une vue analogue à celles des figures précédentes après mise en place d'une couronne artificielle sur la pièce intermédiaire fraisée et imprégnée de verre.

Sur le dessin, on a représenté une portion de mâchoire dans laquelle on voit le maxillaire 1, la gencive 2 et deux molaires 3 et 4.

Une troisième molaire située entre les deux autres a été arrachée et un implant 5 a été fixé dans le maxillaire 1 pour supporter une prothèse destinée à remplacer cette dent manquante.

L'implant 5 est une vis cylindrique en titane qui est vissée directement dans le maxillaire 1.

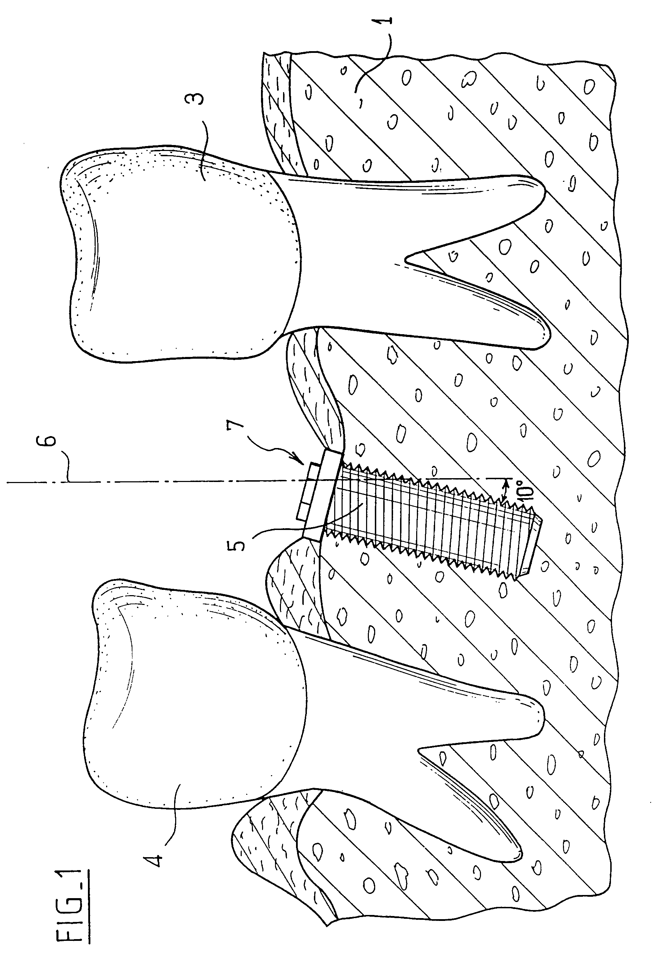

Comme on le voit sur la figure 1, la configuration du maxillaire est telle qu'il a été impossible de mettre en place l'implant 5 selon l'axe 6 de la dent à remplacer.

Par conséquent, l'implant 5 est incliné par rapport à cet axe 6 d'un angle d'environ 10°.

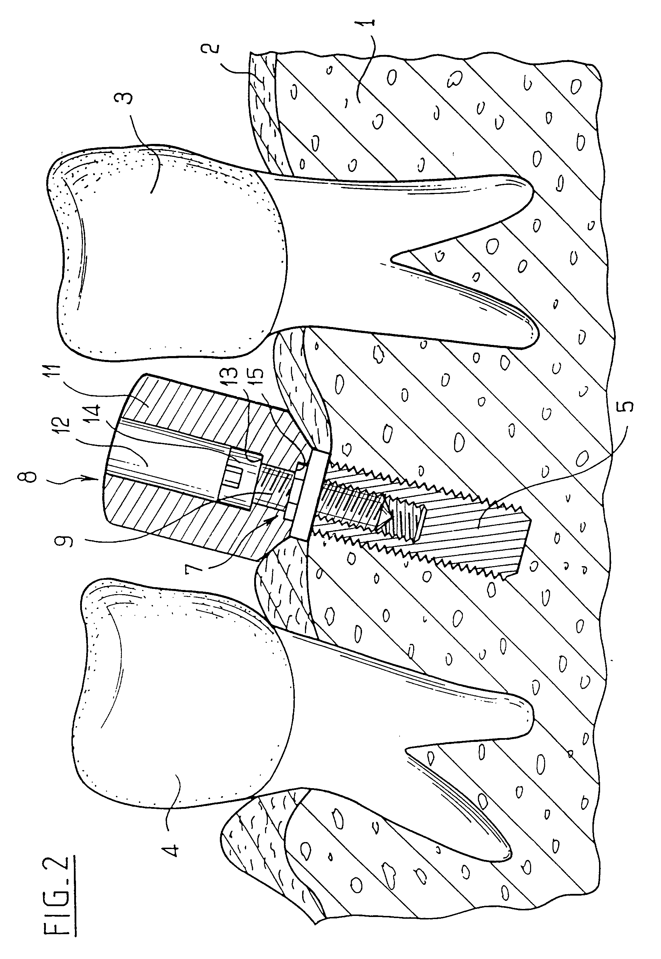

La partie supérieure 7 de l'implant 5 qui est destinée à recevoir une pièce intermédiaire 8 présente une forme anti-rotation par exemple hexagonale, destinée à immobiliser une pièce intermédiaire, laquelle n'est fixée sur l'implant 5 que par une vis 9, comme représenté sur la figure 2.

La pièce intermédiaire 8 comporte une partie inférieure 10, désignée partie transgingivale, et une partie supérieure 11, désignée partie supragingivale.

La partie transgingivale 10 de la pièce intermédiaire présente une forme tronconique tandis que sa partie supragingivale 11 présente une forme cylindrique, de préférence à section circulaire ou elliptique.

Un orifice 12 traverse axialement la pièce intermédiaire 8 et comporte, au voisinage de la séparation entre les parties transgingivale 10 et supragingivale 11 de la pièce intermédiaire, un changement de diamètre qui définit un épaulement 13.

La vis 9 est engagée axialement dans l'orifice traversant 12 de la pièce intermédiaire, la tête 14 de cette vis prenant appui sur l'épaulement 13 pour serrer la pièce intermédiaire 8 contre l'implant 5.

L'embouchure 15 de l'orifice traversant 12 située du coté de l'implant 5 présente une forme hexagonale correspondant exactement à la forme hexagonale de la partie anti-rotation 7 de l'implant 5.

La pièce intermédiaire 8 qui est fixée sur l'implant 5 est réalisée en une poudre à base d'un oxyde métallique, qui présente, selon l'invention, les qualités mécaniques requises, à savoir une friabilité et une solidité convenablement déterminées.

Ainsi, la tenue mécanique de la pièce intermédiaire, poreuse, avant imprégnation par du verre, est mesurable par un test de flexion à trois points qui donne une résistance de 40 à 150 Mpa.

Simultanément, la pièce intermédiaire est suffisamment friable pour pouvoir être usinée facilement dans la bouche d'un patient ou sur un modèle de la bouche du patient avec des instruments dentaires traditionnels.

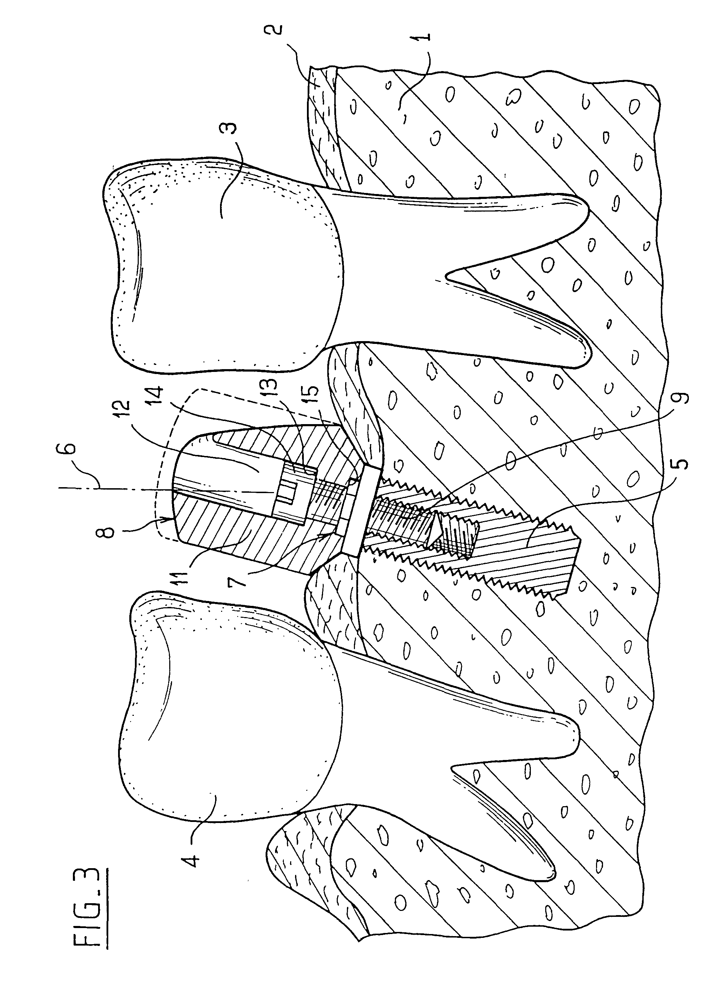

La pièce est rectifiée par le praticien pour prendre une forme tronconique visible sur la figure 3.

Cette forme tronconique est du même type que celle que le praticien donne à un moignon de dent pour le préparer à recevoir une couronne artificielle.

On peut constater sur la figure 3 que l'axe de la forme tronconique de la pièce intermédiaire coïncide sensiblement avec celui 6 de la dent à remplacer.

Conformément à l'invention, la pièce intermédiaire est ensuite démontée de l'implant et imprégnée par un verre.

Elle est ensuite émaillée extérieurement dans sa partie transgingivale par un bio-verre.

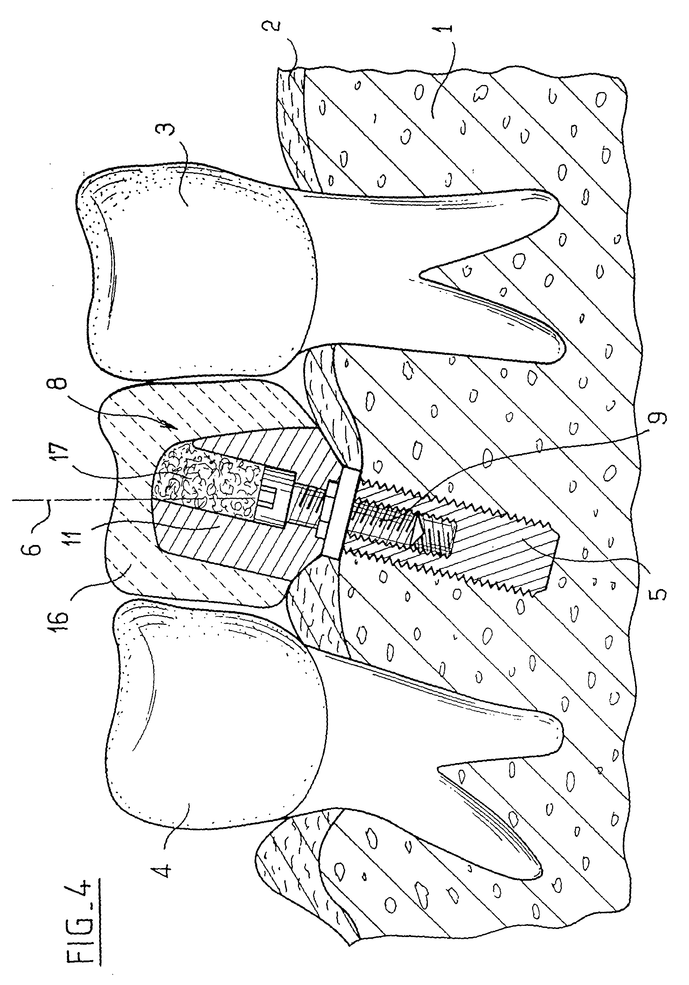

Ainsi préparée, la pièce intermédiaire 8 est refixée sur l'implant, son orifice 12 étant garni d'un matériau de remplissage 17, pour recevoir une couronne 16, comme représenté à la figure 4.

On voit que, grâce à l'invention, la couronne 16 présente une forme symétrique par rapport à l'axe 6 de la dent remplacée, ce qui lui confère une grande solidité.

On va maintenant décrire trois exemples de mise en oeuvre du procédé de réalisation d'une prothèse dentaire selon l'invention.

### Exemple 1

Pour réaliser une prothèse d'incisive centrale, on prépare une poudre à base d'oxyde métallique composée de 50 % en poids d'alumine et de 50 % en poids de zircone partiellement stabilisée à 12 % en Moles d'oxyde de cérium, à laquelle on ajoute 0,6 % en poids d'oxyde ferreux Fe₂O₃, la granulométrie moyenne du mélange pulvérulent ainsi obtenu étant de 10*µ*m et sa surface spécifique est de 1,5 m²/g.

Ce mélange est incorporé dans un liant organique thermoplastique dans une proportion pondérale de 68 % de poudre pour 32 % de liant.

Le liant thermoplastique a une composition pondérale de 67 % de polystyrène, 23 % de paraffine et 10 % de stéarate d'aluminium.

On obtient ainsi une pâte qui est injectée dans un moule dont l'empreinte définit une pièce intermédiaire de diamètre externe de 9 mm.

La pâte ayant durci, la pièce intermédiaire est démoulée et est portée à une température de 320°C à un rythme de 8°C par heure.

Cette première étape de chauffage provoque la calcination du liant et la formation du réseau de pores dans la poudre à base d'oxyde métallique.

La pièce est ensuite portée à une température de 1400°C pendant 5 heures, le chauffage s'effectuant à une vitesse de 5°C par minute.

Cette deuxième étape de chauffage provoque le frittage de la poudre à base d'oxyde métallique.

On obtient alors une pièce intermédiaire de structure poreuse conforme à l'invention ayant une partie transgingivale correspondant précisément à la forme de la partie supérieure de l'implant, de sorte que la pièce intermédiaire est apte à être solidarisée sans jeu sur l'implant par serrage.

La pièce est alors mise en place sur un modèle de la bouche du patient, puis rectifiée de manière traditionnelle jusqu'à ce que sa partie supragingivale présente la forme d'une dépouille d'incisive convenablement préparée pour recevoir une couronne artificielle.

A cet effet, la forme extérieure et l'orientation de la pièce intermédiaire sont rendues compatibles avec les dents adjacentes et antagonistes de la prothèse.

Lorsque la partie supragingivale de la pièce intermédiaire est convenablement préparée, la pièce intermédiaire est démontée de l'implant et est imprégnée d'un verre coloré à l'état liquide dont la composition pondérale est la suivante :

| | |
|---|---|
| SiO₂ | 20 % |
| Al₂O₃ | 20 % |
| B₂O₃ | 18 % |
| Ca₂O₃ | 30 % |
| CaO | 3 % |
| TiO₂ | 3 % |
| Oxydes colorants | 6 % |

A cet effet, le verre et la pièce intermédiaire sont portés pendant deux heures à une température de 1080°C.

La partie transgingivale de la pièce intermédiaire est ensuite émaillée par un bio-verre de composition pondérale suivante :

| | |
|---|---|
| SiO₂ | 31 % |
| Al₂O₃ | 20 % |
| CaF₂ | 39 % |
| NaF | 8 % |
| AlF₃ | 12 % |

La pièce intermédiaire est alors prête, elle peut être à nouveau fixée sur l'implant dans la bouche du patient, pour recevoir une couronne dentaire traditionnelle scellée sur sa partie supragingivale.

### Exemple 2

Pour réaliser une prothèse de prémolaire, on prépare une poudre à base d'oxyde métallique constituée de 100 % en poids de zircone partiellement stabilisée avec 2 % en Moles d'oxyde d'yttrium Y₂O₃.

La granulométrie moyenne de la poudre céramique est de 1*µ*m et sa surface spécifique de 9 m²/g.

Cette poudre est mélangée à raison de 50 % en volume avec un liant organique thermoplastique de composition pondérale suivante :

| | |
|---|---|
| Polypropylène | 65 % |
| cire | 22 % |
| acide stéarique | 13 % |

On obtient ainsi une pâte d'injection qui est injectée dans un moule de section transversale elliptique, de grand axe 8 mm et de petit axe 6 mm.

Après durcissement de la pâte, la pièce est démoulée et portée à une température de 360°C, à raison de 5°C par heure, pour calciner le liant.

La pièce est ensuite chauffée jusqu'à une température de 1200°C pendant deux heures, à raison de 1°C par mn pour réaliser le frittage de la poudre à base d'oxyde métallique.

La pièce intermédiaire est ensuite montée sur l'implant dans la bouche du patient et sa partie supragingivale est rectifiée de manière à prendre la forme d'une couronne dentaire.

Après cette préparation, la pièce intermédiaire est retirée de la bouche du patient et un verre coloré de composition pondérale suivante :

| | |
|---|---|
| SiO₂ | 15 % |
| Al₂O₃ | 24 % |
| B₂O₃ | 10 % |
| CaO | 5 % |
| La₂O₃ | 38 % |
| TiO₂ | 0 % |
| Zn0₂ | 5 % |
| Oxydes colorants | 3 % |

est imprégnée dans la structure poreuse à une température de 1180°C pendant 20 mn.

La partie transgingivale de la pièce intermédiaire est ensuite émaillée par une céramique dentaire classique colorée, tandis que la partie supragingivale de la pièce intermédiaire est émaillée en volume avec une céramique dentaire adaptée en coefficient de dilatation, pour constituer directement la couronne de la prothèse.

### Exemple 3

Pour réaliser une prothèse d'incisive latérale, on prépare une poudre à base d'oxyde métallique composée de 30 % en poids de zircone ZrO₂ partiellement stabilisée avec 10 % en Moles d'oxyde de cérium CeO₂ et 70 % en poids d'alumine Al₂O₃, cette poudre étant dopée avec 0,2 % en poids d'oxyde de manganèse, 0,2 % en poids d'oxyde de titane et 0,005 % en poids d'oxyde de cobalt.

La granulométrie moyenne de la poudre est de 5*µ* m, sa surface spécifique de 5 m²/g.

La poudre est mélangée, à raison de 62 % en volume, avec un liant organique thermodurcissable constituant les 38 % en volume restant.

Le liant thermodurcissable est composé de 55 % en poids de résine epoxy, 22 % en poids de diluant réactif, 11 % en poids de catalyseur, 2 % en poids d'accélérateur de prise et 10 % en poids de plastifiant.

La pâte d'injection ainsi préparée est injectée dans un moule dont l'empreinte a une forme générale cylindrique de 6 mm de diamètre.

Après démoulage, la pièce est portée à une température de 400°C à raison de 10°C par heure, pour réaliser la calcination du liant, puis à une température de 1300°C pendant 6 heures, à raison de 3°C par minute, pour réaliser le frittage de la poudre à base d'oxyde métallique.

La pièce est alors montée sur l'implant sur un modèle de la bouche du patient et sa partie supragingivale est usinée pour recevoir une couronne.

Après préparation et retrait de la bouche du patient, la pièce intermédiaire est imprégnée d'un verre ayant la composition pondérale suivante :

| | |
|---|---|
| SiO₂ | 17 % |
| Al₂0₃ | 21 % |
| B₂O₃ | 13 % |
| CaO | 0 % |
| La₂O₃ | 45 % |
| Zn0₂ | 3 % |
| TiO₂ | 1 % |
| Oxydes colorants | 0 %. |

La température d'imprégnation est de 1140°C, la durée du traitement est 1 heure 30.

Après imprégnation, la partie transgingivale de la pièce intermédiaire est polie très finement.

La pièce est alors fixée à l'implant et une couronne est scellée sur sa partie supragingivale.

Il est bien entendu que les exemples de mise en oeuvre qui viennent d'être décrits ne présentent aucun caractère limitatif et qu'ils pourront recevoir toute modification désirable sans sortir pour cela du cadre de l'invention.

## Revendications

1. Procédé pour réaliser une prothèse dentaire, comprenant l'étape consistant à fixer de préférence à l'aide d'une vis, une pièce intermédiaire sur un implant de préférence métallique immobilisé dans le maxillaire d'un patient, caractérisé par le fait que l'on utilise une pièce intermédiaire (8) obtenue par frittage d'une poudre à base d'oxydes métalliques présentant une structure poreuse à pores ouverts ; que l'on monte la pièce intermédiaire (8) sur l'implant (5) sur un modèle de la bouche du patient ; qu'à l'aide d'un outil tel qu'une fraise, on donne à la surface externe de la pièce intermédiaire (8) une forme appropriée à la réalisation de la prothèse ; que l'on démonte la pièce intermédiaire de l'implant (5) ; que l'on imprègne la pièce intermédiaire avec du verre en la plaçant au contact de ce verre dans une ambiance à température suffisamment élevée pour que le verre s'infiltre à l'état fondu dans la pièce intermédiaire et occupe la totalité de ses pores ; et qu'après refroidissement, l'on refixe la pièce intermédiaire (8) sur l'implant (5).

2. Procédé selon la revendication 1, caractérisé par le fait que l'on donne à la surface externe de la pièce intermédiaire (8) une forme de dépouille apte à servir de support à une couronne (16).

3. Procédé selon la revendication 1, caractérisé par le fait que l'on donne à la surface externe de la pièce intermédiaire (8) la forme que l'on désire donner à la dent artificielle.

4. Procédé selon l'une quelconque des revendications 1 à 3, caractérisé par le fait que l'étape d'imprégnation de verre s'effectue à une température comprise entre environ 1080 et 1200°C, pendant une durée de 20 mn à 2 heures.

5. Procédé selon l'une quelconque des revendications 1 à 4, caractérisé par le fait que l'on utilise un verre ayant la composition pondérale suivante :
| | |
|---|---|
| SiO₂ | 13 à 20 % |
| Al₂O₃ | 10 à 28 % |
| B₂O₃ | 10 à 18 % |
| CaO | 0 à 8 % |
| La₂O₃ | 20 à 50 % |
| TiO₂ | 0 à 10 % |
| ZnO₂ | 0 à 5 % |
| Oxydes colorants | 0 à 10 % |

6. Procédé selon l'une quelconque des revendications 1 à 5,
caractérisé par le fait qu'après avoir imprégné la pièce intermédiaire (8) par du verre à l'état fondu, on recouvre la partie de la pièce intermédiaire (8) qui ne vient par directement au contact de l'implant (5), d'un émail qui donne à la surface extérieure de la pièce intermédiaire (8) l'apparence, et notamment la translucidité, d'une dent naturelle.

7. Pièce intermédiaire pour la mise en oeuvre du procédé selon l'une quelconque des revendications 1 à 6, caractérisée par le fait qu'elle présente, avant imprégnation par du verre, des pores dont le diamètre est compris entre environ 0,2 et 2 *µ*m, lesdits pores constituant un réseau ouvert continu qui occupe entre environ 15 et 50 % du volume total de la pièce intermédiaire.

8. Procédé de fabrication d'une pièce intermédiaire selon la revendication 7, caractérisé par le fait que l'on réalise une pâte par mélange d'une poudre à base d'oxyde métallique avec un liant organique ; que l'on met en forme cette pâte pour obtenir une pièce comportant une partie inférieure (10) dont la forme correspond exactement avec la forme de la partie supérieure (7) de l'implant (5) qui doit recevoir la pièce intermédiaire (8) et une partie supérieure (11) dont la forme n'est pas déterminée mais qui peut être avantageusement cylindrique, cette partie supérieure (11) de la pièce intermédiaire (8) étant destinée à être façonnée par le praticien sur un modèle de la bouche du patient par exemple à l'aide d'une fraise ; que l'on procède ensuite à un chauffage de la pièce ainsi obtenue, ce qui provoque d'abord l'élimination du liant organique par calcination, puis le frittage de la poudre à base d'oxyde métallique.

9. Procédé selon la revendication 8, caractérisé par le fait que l'on réalise la pâte en mélangeant entre 45 et 70 % en volume de poudre à base d'oxyde métallique et de 30 % 55 % en volume de liant organique.

10. Procédé selon la revendication 9, caractérisé par le fait que l'on utilise comme poudre à base d'oxyde métallique un mélange d'alumine (Al₂O₃) et de zircone (ZrO₂) partiellement stabilisée.

11. Procédé selon la revendication 10, caractérisé par le fait que la proportion d'alumine et de zircone est de 0 à 70 % en poids d'alumine 30 à 100 % en poids de zircone.

12. Procédé selon l'une quelconque des revendications 8 à 11,
caractérisé par le fait que l'on dope la poudre à base d'oxyde métallique pour la colorer en y introduisant des oxydes métalliques d'éléments de transition tels que Ti, V, Cr, Mn, Fe, Co et Ni dans une proportion de préférence comprise entre 0 et 1 % en poids.

13. Procédé selon l'une quelconque des revendications 8 à 12, caractérisé par le fait que l'élimination du liant s'effectue par calcination à une température comprise entre environ 280° et 400°C pendant une durée de 2 à 24 heures, la montée en température s'effectuant à un rythme d'environ 5 à 10°C par heure.

14. Procédé selon l'une quelconque des revendications 8 à 13,
caractérisé par le fait que le frittage s'effectue à une température comprise entre 1100 et 1450° C pendant une durée de 2 à 10 heures, la montée en température s'effectuant à un rythme d'environ 60 à 300°C par heure.

## Claims

1. Method for the production of a dental prosthesis, comprising a step which consists in fixing an intermediate piece, preferably by means of a screw, on an implant, which is preferably made of metal and immobilized in the maxilla of a patient, characterized in that an intermediate piece (8) is used which is obtained by sintering of a metal oxide-based powder having a porous structure with open pores; in that the intermediate piece (8) is mounted on the implant (5) on a model of the patient's mouth; in that a tool such as a milling cutter is used to give the outer surface of the intermediate piece (8) a form appropriate to the production of the prosthesis; in that the intermediate piece is removed from the implant (5); in that the intermediate piece is impregnated with glass by placing it in contact with this glass in an atmosphere in which the temperature is sufficiently high to ensure that the glass infiltrates in the molten state into the intermediate piece and occupies all of its pores; and in that, after cooling, the intermediate piece (8) is once again fixed on the implant (5).

2. Method according to Claim 1, characterized in that the outer surface of the intermediate piece (8) is given a relief formation which can serve as a support for a crown (16).

3. Method according to Claim 1, characterized in that the outer surface of the intermediate piece (8) is given the shape which it is desired to impart to the artificial tooth.

4. Method according to any one of Claims 1 to 3, characterized in that the glass impregnation step is carried out at a temperature of between about 1080 and 1200°C, for a duration of 20 minutes to 2 hours.

5. Method according to any one of Claims 1 to 4, characterized in that a glass is used which has the following composition by weight:
| | |
|---|---|
| SiO₂ | 13 to 20% |
| Al₂O₃ | 10 to 28% |
| B₂O₃ | 10 to 18% |
| CaO | 0 to 8% |
| La₂O₃ | 20 to 50% |
| TiO₂ | 0 to 10% |
| ZnO₂ | 0 to 5% |
| Colouring oxides | 0 to 10%. |

6. Method according to any one of Claims 1 to 5, characterized in that, after the intermediate piece (8) has been impregnated with glass in the molten state, that part of the intermediate piece (8) which does not come into direct contact with the implant (5) is covered with an enamel which gives the outer surface of the intermediate piece (8) the appearance, and in particular the translucency, of a natural tooth.

7. Intermediate piece for carrying out the method according to any one of Claims 1 to 6, characterized in that, before impregnation with glass, it has pores whose diameter is between about 0.2 and 2 µm, said pores constituting a continuous open network which takes up between about 15 and 50% of the total volume of the intermediate piece.

8. Method for the manufacture of an intermediate piece according to Claim 7, characterized in that a paste is formed by mixing a metal oxide-based powder with an organic binder; in that this paste is shaped to obtain a piece comprising a lower part (10) whose shape corresponds exactly to the shape of the upper part (7) of the implant (5) which is to receive the intermediate piece (8), and an upper part (11) whose shape is not determined but which can advantageously be cylindrical, this upper part (11) of the intermediate piece (8) being intended to be fashioned by the practitioner on a model of the patient's mouth, for example with the aid of a milling cutter; in that the piece thereby obtained is then heated, which first brings about elimination of the organic binder by calcination, then sintering of the metal oxide-based powder.

9. Method according to Claim 8, characterized in that the paste is obtained by mixing between 45 and 70% by volume of metal oxide-based powder and 30% to 55% by volume of organic binder.

10. Method according to Claim 9, characterized in that the metal oxide-based powder used is a mixture of aluminium oxide (Al₂O₃) and partially stabilized zirconium oxide (ZrO₂).

11. Method according to Claim 10, characterized in that the proportion of aluminium oxide and zirconium oxide is from 0 to 70% by weight of aluminium oxide and from 30 to 100% by weight of zirconium oxide.

12. Method according to any one of Claims 8 to 11, characterized in that the metal oxide-based powder is doped to colour it by introducing metal oxides of transition elements such as Ti, V, Cr, Mn, Fe, Co and Ni in a proportion preferably of between 0 and 1% by weight.

13. Method according to any one of Claims 8 to 12, characterized in that the binder is eliminated by calcination at a temperature of between about 280° and 400°C for a duration of 2 to 24 hours, the temperature increasing at a rate of about 5 to 10°C per hour.

14. Method according to any one of Claims 8 to 13, characterized in that the sintering is carried out at a temperature of between 1100 and 1450°C for a duration of 2 to 10 hours, the temperature increasing at a rate of about 60 to 300°C per hour.

## Patentansprüche

1. Verfahren zum Herstellen einer Zahnprothese mit einem Schritt, bei dem ein Zwischenstück, vorzugsweise mittels einer Schraube auf einem vorzugsweise metallischen Implantat befestigt wird, das im Kieferknochen eines Patienten fest angebracht ist, **dadurch gekennzeichnet,** dass ein Zwischenstück (8) verwendet wird, das durch Sintern eines Pulvers auf Metalloxidbasis erhalten wird, das eine poröse Struktur mit offenen Poren aufweist; das Zwischenstück (8) auf einem Modell des Munds des Patienten auf dem Implantat (5) angebracht wird; der Außenfläche des Zwischenstücks (8) mittels eines Werkzeugs wie eines Fräsers eine Form verliehen wird, die zum Herstellen der Prothese geeignet ist; das Zwischenstück vom Implantat (5) abmontiert wird; das Zwischenstück dadurch mit einem Glas imprägniert wird, dass es in einer Umgebung mit einer Temperatur, die ausreichend hoch dafür ist, dass das Glas in geschmolzenem Zustand in das Zwischenstück eindringt und alle seine Poren ausfüllt, in Kontakt mit diesem Glas gebracht wird; und nach dem Abkühlen das Zwischenstück (8) erneut auf dem Implantat (5) befestigt wird.

2. Verfahren nach Anspruch 1, **dadurch gekennzeichnet,** dass der Außenfläche des Zwischenstücks (8) eine stumpfartige Form verliehen wird, die dazu geeignet ist, als Halterung für eine Krone (16) zu dienen.

3. Verfahren nach Anspruch 1, **dadurch gekennzeichnet,** dass der Außenfläche des Zwischenstücks (8) diejenige Form verliehen wird, die einem künstlichen Zahn gegeben werden soll.

4. Verfahren nach einem der Ansprüche 1 bis 3, **dadurch gekennzeichnet,** dass der Schritt des Imprägnierens des Glases bei einer Temperatur von 1080 und 1200°C für eine Dauer von 20 Min. bis 2 Stunden erfolgt.

5. Verfahren nach einem der Ansprüche 1 bis 4, **dadurch gekennzeichnet,** dass ein Glas mit der folgenden gewichtsbezogenen Zusammensetzung verwendet wird:
| | |
|---|---|
| SiO₂ | 13 bis 20 % |
| Al₂O₃ | 10 bis 28 % |
| B₂O₃ | 10 bis 18 % |
| CaO | 0 bis 8 % |
| La₂O₃ | 20 bis 50 % |
| TiO₂ | 0 bis 10 % |
| ZnO₂ | 0 bis 5 % |
| färbende Oxide | 0 bis 10 % |

6. Verfahren nach einem der Ansprüche 1 bis 5, **dadurch gekennzeichnet,** dass nach dem Imprägnieren des Zwischenstücks (8) mit Glas in geschmolzenem Zustand derjenige Teil des Zwischenstücks (8), der nicht in direkten Kontakt mit dem Implantat (5) kommt, mit einem Überzug bedeckt wird, der der Außenfläche des Zwischenstücks (8) das Aussehen und insbesondere die Lichtdurchlässigkeit eines natürlichen Zahns verleiht.

7. Zwischenstück zum Realisieren des Verfahrens nach einem der Ansprüche 1 bis 6, **dadurch gekennzeichnet,** dass es vor der Imprägnierung mit Glas Poren aufweist, deren Durchmesser zwischen ungefähr 0,2 und ungefähr 2 *µ*m liegt, wobei diese Poren ein offenes, durchgehendes Gitter bilden, das ungefähr 15 bis 50 % des Gesamtvolumens des Zwischenstücks einnimmt.

8. Herstellverfahren für ein Zwischenstück nach Anspruch 7, **dadurch gekennzeichnet,** dass durch Vermischen eines Pulvers auf Metalloxidbasis mit einem organischen Bindemittel eine Paste hergestellt wird; diese Paste so geformt wird, dass ein Zwischenstück mit einem unteren Teil (10), dessen Form genau der Form des oberen Teils (7) des Implantats (5) entspricht, das das Zwischenstück aufnehmen soll, und einem oberen Teil (11) erhalten wird, dessen Form nicht bestimmt ist, jedoch in vorteilhafter Weise zylindrisch sein kann, wobei dieser obere Teil (11) des Zwischenstücks dazu dient, vom Zahntechniker oder Zahnarzt auf einem Modell des Mundes des Patienten z. B. mittels eines Fräsers bearbeitet zu werden; und anschließend ein Aufheizen des so erhaltenen Zwischenstücks erfolgt, wodurch zunächst durch Ausheizen eine Beseitigung des organischen Bindemittels und anschließend ein Sintern des Pulvers auf Metalloxidbasis hervorgerufen wird.

9. Verfahren nach Anspruch 8, **dadurch gekennzeichnet,** dass die Paste dadurch hergestellt wird, dass zwischen 45 und 70 Volumen-% des Pulvers auf Metalloxidbasis und 30 bis 55 Volumen-% des organischen Bindemittels gemischt werden.

10. Verfahren nach Anspruch 9, **dadurch gekennzeichnet,** dass als Pulver auf Metalloxidbasis ein Gemisch aus Aluminiumoxid (Al₂O₃) und teilstabilisiertem Zirkoniumoxid (ZrO₂) verwendet wird.

11. Verfahren nach Anspruch 10, **dadurch gekennzeichnet,** dass der Gehalt von Aluminiumoxid und Zirkoniumoxid 0 bis 70 Gewichts-% Aluminiumoxid auf 30 bis 100 Zirkoniumoxid beträgt.

12. Verfahren nach einem der Ansprüche 8 bis 11, **dadurch gekennzeichnet,** dass das Pulver auf Metalloxidbasis zum Einfärben dadurch dotiert wird, dass Metalloxide von Übergangselementen wie Ti, V, Cr, Mn, Fe, Co und Ni mit einem Gehalt von vorzugsweise zwischen 0 und 1 Gewichts-% in es eingeführt werden.

13. Verfahren nach einem der Ansprüche 8 bis 12, **dadurch gekennzeichnet,** dass die Beseitigung des Bindemittels durch Ausheizen bei einer Temperatur zwischen ungefähr 280°C und 400°C während einer Dauer von 2 bis 24 Stunden erfolgt, wobei der Temperaturanstieg mit einem Takt von ungefähr 5 bis 10°C pro Stunde erfolgt.

14. Verfahren nach einem der Ansprüche 8 bis 13, **dadurch gekennzeichnet,** dass das Sintern bei einer Temperatur von 1100 und 1450°C während einer Dauer von 2 bis 10 Stunden erfolgt, wobei der Temperaturanstieg mit einem Takt von ungefähr 60 bis 300°C pro Stunde erfolgt.
